# EUROPÄISCHE PATENTANMELDUNG

(11) **EP 3 698 909 A1**
(43) Veröffentlichungstag der Anmeldung: **26.08.2020**
(21) Anmeldenummer: 19158173.5
(22) Anmeldetag: 20.02.2019
(51) Int. Cl.: B23C 5/04, B23C 5/10, B23B 41/12, B23C 5/28

(54) **WERKZEUG ZUR OBERFLÄCHENBEARBEITUNG**

(71) Anmelder: KOMET Deutschland GmbH, 74354 Besigheim (DE)
(72) Erfinder: HENERICHS, Marcel, 74354 Besigheim (DE)
(74) Vertreter: Ciesla, Dirk

(57) **Zusammenfassung**

Um eine Vorrichtung (1) zur Oberflächenbearbeitung einer Bohrungsinnenmantelfläche einer Bohrung, umfassend einen Befestigungsgrundkörper (2) mit einer Längsachse (L) und einer Außenmantelfläche (6), an der Außenmantelfläche (6) an Befestigungsabschnitten (8) befestigte Schneidelemente (3), wobei die Schneidelemente (3) jeweils mindestens eine Schneide (5) zur Erzeugung einer rillenförmigen Oberflächenstruktur in der Bohrungsinnenmantelfläche aufweisen und mindestens eine der Schneiden (5) ein polykristallines Diamantmaterial umfasst, anzugeben, mittels welcher das Auftreten von Schwingungen reduziert und zugleich die Montage und Reparatur der Schneidelemente (3) schneller und damit kostengünstiger realisiert werden kann, wird vorgeschlagen, dass mindestens eines der Schneidelemente (3) jeweils mittels mindestens eines mechanischen Befestigungselements (12) reversibel lösbar befestigt ist und mindestens zwei der Befestigungsabschnitte (8) an verschiedenen Längsachsenpositionen angeordnet sowie mittels eines monolithischen Befestigungsgrundkörpers (2) miteinander verbunden sind.

## Beschreibung

Die vorliegende Erfindung betrifft eine Vorrichtung zur Oberflächenbearbeitung einer Bohrungsinnenmantelfläche einer Bohrung, umfassend einen Befestigungsgrundkörper mit einer Längsachse und einer Außenmantelfläche, an der Außenmantelfläche an Befestigungsabschnitten befestigte Schneidelemente, wobei die Schneidelemente jeweils mindestens eine Schneide zur Erzeugung einer rillenförmigen Oberflächenstruktur in der Bohrungsinnenmantelfläche aufweisen und mindestens eine der Schneiden ein polykristallines Diamantmaterial umfasst.

Die vorliegende Erfindung liegt auf dem Gebiet der Aufrauwerkzeuge, insbesondere der Rillierwerkzeuge.

Solche Werkzeuge werden insbesondere zur Oberflächenbearbeitung von Zylinderwänden von Verbrennungsmotoren dergestalt verwendet, dass in die Zylinderwände, bei denen es sich um Bohrungsinnenmantelflächen handelt, rillenförmige Vertiefungen, also eine rillenförmige Oberflächenstruktur, eingebracht werden bzw. wird. Hierfür wird das Werkzeug um eine Längsachse rotiert, während Schneidelemente des Werkzeugs die Zylinderwände im Sinne einer spanabhebenden Bearbeitung kontaktieren. Auf diese Weise werden in einer Zylinderwand umlaufende Rillen, welche auch als Mikrorillen bezeichnet werden, erzeugt, weil eine jeweilige Schneide der Schneidelemente typischerweise den rillenförmigen Vertiefungen entsprechend ausgestaltete Schneidzähne aufweist.

Solchermaßen eingebrachte rillenförmige Vertiefungen verbessern typischerweise die Haftung einer auf die Zylinderwände mittels thermischen Spritzens oder dergleichen aufgebrachten Schicht. Durch die Wahl eines oder mehrerer geeigneter Schichtwerkstoffe kann mittels einer solchen Schicht sodann das Auftreten und der Umfang von Verschleißerscheinungen an den Zylinderwänden reduziert werden.

Das Einbringen von rillenförmigen Vertiefungen und damit die Verbesserung einer Haftung einer verschleißreduzierenden Beschichtung ist daher insbesondere im Falle von Zylinderwänden von Verbrennungsmotoren relevant, welche aus einem Leichtbauwerkstoff, wie zum Beispiel aus einer Aluminiumlegierung, bestehen oder eine solche Legierung umfassen. Denn Zylinderwände aus einer Aluminiumlegierungen verschleißen durch einen reibenden Kontakt mit einem Zylinder oder dergleichen besonders schnell, weil diese Legierungen eine relative niedrige Streckgrenze und damit einhergehend eine relativ hohe Bruchdehnung aufweisen. Um jedoch Gewicht zu sparen, ist der Einsatz von Aluminiumlegierungen in Verbrennungsmotoren gleichwohl vorteilhaft, so dass insbesondere bei der Verwendung dieser Legierungen eine gute Haftung einer verschleißreduzierenden Beschichtung an den Zylinderwänden benötigt wird.

Eine Vorrichtung zur Bearbeitung von Zylinderwänden von Verbrennungsmotoren ist aus der DE 10 2017 202 394 A1 bekannt. Bei dieser Vorrichtung ist das Schneidelement dadurch fortgebildet, dass das Schneidelement auf einem rotierenden Schneidring angeordnet ist, wobei das Schneidelement eine Schlitzkontur mit einer Mehrzahl von in Richtung der Rotationsachse nebeneinander angeordneten Schneiden aufweist, wobei sich die einzelnen Schneiden in Rotationsrichtung erstrecken.

Aus der DE 10 2016 216 464 A1 ist ein Aufrauwerkzeug zum Aufrauen einer zylindrischen Oberfläche einer Kolbenlauffläche einer Zylinderbohrung oder Zylinderbuchse in einem Verbrennungsmotor durch Erzeugen einer definierten Mikrostruktur aus einer Vielzahl in einem axialen Abstand umlaufenden Mikrorillen bekannt.

Bei der Verwendung der aus dem Stand der Technik bekannten Werkzeuge, die auch als Vorrichtungen bezeichnet werden können, treten jedoch unerwünschte Schwingungen auf. Dies wirkt sich negativ auf die Standzeit dieser Werkzeuge aus. Außerdem beeinträchtigen Schwingungen die Güte der erzeugten rillenförmigen Oberflächenstruktur, so dass entsprechend gebildete Rillen in einer Zylinderwand im ungünstigen Falle für eine ausreichende Haftung einer verschleißreduzierenden Beschichtung ungeeignet sind.

Außerdem ist die Montage und Reparatur, also die Wartung, bei den aus dem Stand der Technik bekannten Werkzeugen zeitaufwändig, weil hierfür typischerweise zuerst eine gelötete Verbindung eines Schneidelements aufgeschmolzen und sodann ein repariertes bzw. ausgetauschtes Schneidelement an diesen Werkzeugen mittels Herstellung einer gelöteten Verbindung befestigt werden muss. Dies führt aufgrund von thermischen Spannungen zu einer Verformung des gesamten Werkzeugs. Aufgrund der benötigten Fertigungstoleranzen zur Erzeugung einer definierten rillenförmigen Oberflächenstruktur ist daher typischerweise der Austausch einzelner Schneidelemente und damit Schneiden nicht realisierbar. Vielmehr müssen selbst im Falle nur eines defekten Schneidelements bzw. einer defekten Schneide alle Schneidelemente und damit Schneiden demontiert und sodann zusammen mit dem ausgetauschten oder reparierten Schneidelement wieder an dem Werkzeug befestigt werden.

Aufgabe der vorliegenden Erfindung ist es daher, eine Vorrichtung der eingangs genannten Art anzugeben, mittels welcher das Auftreten von Schwingungen reduziert und zugleich die Montage und Reparatur der Schneidelemente schneller und damit kostengünstiger realisiert werden kann.

Die Aufgabe wird durch eine Vorrichtung nach Anspruch 1 gelöst. Vorteilhafte Weiterbildungen sind in den abhängigen Ansprüchen angegeben.

Eine Vorrichtung zur Oberflächenbearbeitung einer Bohrungsinnenmantelfläche einer Bohrung umfasst einen Befestigungsgrundkörper mit einer Längsachse und einer Außenmantelfläche, an der Außenmantelfläche an Befestigungsabschnitten befestigte Schneidelemente, wobei die Schneidelemente jeweils mindestens eine Schneide zur Erzeugung einer rillenförmigen Oberflächenstruktur in der Bohrungsinnenmantelfläche aufweisen und mindestens eine der Schneiden ein polykristallines Diamantmaterial umfasst, wobei mindestens eines der Schneidelemente jeweils mittels mindestens eines mechanischen Befestigungselements reversibel lösbar befestigt ist und mindestens zwei der Befestigungsabschnitte an verschiedenen Längsachsenpositionen angeordnet sowie mittels eines monolithischen Materialbereichs des Befestigungsgrundkörpers miteinander verbunden sind.

Dadurch, dass die Befestigungsabschnitte verschiedener Längsachsenpositionen mittels des monolithischen Materialbereichs verbunden sind, wird in vorteilhafter Weise das Auftreten von Schwingungen bei dem Einsatz der Vorrichtung reduziert. Denn in dem monolithischen Materialbereich wird eine Schwingungsenergie besonders gut dissipiert.

Indem mindestens eines der Schneidelemente mittels des mechanischen Befestigungselements reversibel lösbar befestigt ist, kann dieses Schneidelement und damit die entsprechende Schneide besonders einfach repariert oder ausgetauscht werden, ohne dass der Befestigungsgrundkörper derart thermisch oder mechanisch beansprucht wird, dass dieser sich vorgegebene Toleranzen überschreitend verformen würde.

Bei der Vorrichtung kann es sich insbesondere um ein Aufrauwerkzeug, vorzugsweise ein Rillierwerkzeug handeln. Das Rillierwerkzeug kann insbesondere als Igelfräser ausgestaltet sein.

Unter der Längsachse des Befestigungsgrundkörpers ist insbesondere die Achse zu verstehen, um die der Befestigungsgrundkörper und damit die Vorrichtung zur Erzeugung der rillenförmigen Oberflächenstruktur gedreht wird.

Bezüglich der Längsachse können im Sinne von Zylinderkoordinaten oder Polarkoordinaten eine radiale Richtung und eine azimutale Richtung definiert werden. Bei der azimutalen Richtung kann es sich um eine Drehrichtung des Befestigungsgrundkörpers und damit der Vorrichtung handeln.

Mithilfe der radialen Richtung kann beispielsweise ein orthogonaler Abstand, also ein Außenradius, der Außenmantelfläche bezüglich der Längsachse definiert werden.

Ein Außenradius der Außenmantelfläche kann eine veränderliche Funktion der azimutalen Richtung sein. Eine solche Funktion kann an bestimmten Stellen unstetig sein. Durch eine Unstetigkeit wird zum Beispiel eine in Richtung der Längsachse verlaufende Kante sowie eine Fläche definiert, deren Normalenvektor mit der azimutalen Richtung zusammenfällt oder geringfügig bezüglich der azimutalen Richtung divergiert.

Unter dem Befestigungsabschnitt ist insbesondere ein Abschnitt der Außenmantelfläche zu verstehen, welcher das Schneidelement flächenmäßig kontaktiert. Der Befestigungsabschnitt kann insbesondere eine Fläche umfassen, deren Normalenvektor mit einer radialen Richtung zusammenfällt oder deren Normalenvektor geringfügig bezüglich der radialen Richtung divergiert. Die durch den Befestigungsabschnitt gebildete Fläche kann insbesondere dreidimensional sein und eine oder mehrere Stufen aufweisen. Das Schneidelement kann dabei eine solchermaßen gebildete Stufe kontaktieren.

Unter dem polykristallinen Diamantmaterial ist insbesondere ein Material zu verstehen, bei dem eine Vielzahl von Diamantkörnern bzw. Diamantkristallen mittels eines CVD Verfahrens aus einer Gasphase ausgeschieden wurden. Vorzugsweise ist die mittlere Korngröße der Diamantkörnern bzw. Diamantkristalle größer oder gleich 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm oder 100 µm.. Solchermaßen ausgewählte Korngrößen sind für eine Erzeugung von Schneidzähnen in einer entsprechenden grobkörnigen Rohschneide aus dem polykristallinen Diamantmaterial vorteilhaft, weil dies den flächenmäßigen Anteil transkristalliner Schnittflächen gegenüber interkristallinen Schnittflächen erhöht. Dementsprechend können aus der Rohschneide die Schneidzähne insbesondere mittels eines oder mehrerer Laserstrahlen in verbesserter Weise herausgeschnitten werden, so dass sich die Standzeit der Schneide und damit der Vorrichtung insgesamt erhöht.

Alternativ ist es denkbar und auch möglich, dass die mittlere Korngröße des polykristallinen Diamantmaterials feinkörnig ist, insbesondere kleiner 15 µm, kleiner oder gleich 10 µm, kleiner oder gleich 5 µm. Vorzugsweise ist das polykristalline Diamantmaterial einphasig, also aus einer Diamantphase bestehend. Mit einphasig ist insbesondere gemeint, dass die Diamantkörner bzw. Diamantkristalle des polykristallinen Diamantmaterials binderphasenfrei gebildet sind.

Die Schneide umfasst insbesondere eine Vielzahl von Schneidzähnen. Alternativ kann die Schneide auch als Gesamtheit einer Vielzahl von Schneidzähnen betrachtet werden. Die Schneidezähne können dabei jeweils durch eine Nut oder dergleichen voneinander beabstandet angeordnet sein, zum Beispiel im Sinne einer Säge.

Unter einer reversibel lösbaren Befestigung mittels des mechanischen Befestigungselements ist insbesondere zu verstehen, dass das Schneidelement bezüglich sich selbst sowie vorzugsweise bezüglich des Befestigungsgrundkörpers im Wesentlichen, vorzugweise vollständig, zerstörungsfrei gelöst und sodann nach einem Austausch oder einer Reparatur, insbesondere des Schneidelementes, an dem Befestigungsgrundkörper befestigt werden kann, zum Beispiel im Sinne einer Schraubenverbindung oder einer Klemmverbindung.

Unter der Längsachsenposition ist insbesondere eine Längsachsenposition eines Befestigungsabschnitts zu verstehen, welche durch einen Flächenmittelpunkt einer von dem Befestigungsabschnitt umfassten Fläche der Außenmantelfläche definiert ist. In einem solchen Flächenmittelpunkt ist vorzugsweise ein mit dem mechanischen Befestigungselement zusammenwirkender Abschnitt oder Bereich in dem Befestigungsgrundkörper dergestalt vorgesehen, dass dieser in den Befestigungsabschnitt mündend ist, zum Beispiel dergestalt, dass ein Gewindeeingang bündig mit dem Befestigungsabschnitt angeordnet ist.

Unter dem monolithischen Materialbereich ist insbesondere ein Bereich des Befestigungsgrundkörpers zu verstehen, der keine makroskopischen Grenzflächen aufweist, wie diese zum Beispiel im Falle einer Segmentierung des Befestigungsgrundkörpers zum Beispiel in einzelne Scheiben oder dergleichen vorläge. Der monolithische Materialbereich kann auch als monolithischer Materialpfad in und/oder an dem Befestigungsgrundkörper bezeichnet werden, der zumindest an den Befestigungsabschnitten verschiedener Längsachsenpositionen jeweils mit der Außenmantelfläche mindestens zwei gemeinsame Flächen bildend ist. Der Befestigungsgrundkörper ist in dem monolithischen Materialbereich insbesondere einstückig ausgeformt.

Vorzugsweise ist der Befestigungsgrundkörper monolithisch ausgeformt.

Der monolithische Materialbereich umfasst insbesondere einen Stahl. Vorzugsweise besteht der monolithische Materialbereich aus einem Stahl.

Gemäß einer Weiterbildung der Vorrichtung sind die jeweils mittels mindestens des einen mechanischen Befestigungselements reversibel lösbar befestigten Schneidelemente an den an verschiedenen Längsachsenpositionen angeordneten Befestigungsabschnitten befestigt. Dadurch wird die Vorrichtung noch weiter verbessert, weil die durch den monolithischen Materialbereich realisierte Schwingungsdämpfung mit der durch die mechanischen Befestigungselemente realisierten einfachen Wartung der Schneidelemente (diese sind reversibel lösbar befestigt) jeweils an denselben Befestigungsabschnitten realisiert wird. Hierbei tritt ein synergistischer Effekt dergestalt auf, dass insbesondere der monolithische Materialbereich für die Befestigung der mechanischen Befestigungselemente besonders gut geeignet ist, weil dieser Bereich eine Relativbewegung zwischen den Befestigungsabschnitten sperrend ist.

Gemäß einer Weiterbildung der Vorrichtung ist der monolithische Materialbereich in azimutaler Richtung geschlossen ausgeformt, zum Beispiel im Sinne eines Rings oder einer damit verwandten topologischen Form. Dadurch wird eine Schwingungsdämpfung bei einer für die Bearbeitung einer rotationssymmetrischen Bohrungsinnenmantelfläche besonders vorteilhaften Form des monolithischen Materialbereichs und damit des Befestigungsgrundkörpers bereitgestellt.

Danach ist der monolithische Materialbereich insbesondere ringförmig, vorzugsweise als Hohlzylinder ausgestaltet.

Gemäß einer Weiterbildung der Vorrichtung sind die Schneiden derart ausgeformt, dass durch diese an einer ersten Längsachsenposition des Befestigungsgrundkörpers eine erste äußere radiale Abmessung, insbesondere ein erster Durchmesser, der Vorrichtung und an einer zweiten Längsachsenposition des Befestigungsgrundkörpers eine zweite äußere radiale Abmessung, insbesondere ein zweiter Durchmesser, definiert sind. Vorzugsweise ist die erste äußere Abmessung von der zweiten verschieden, so dass die Vorrichtung entlang der Längsachse zumindest abschnittsweise konisch ausgeformt ist. Vorzugsweise ist die Vorrichtung mittels der Schneiden derart konisch ausgestaltet, dass sich eine entsprechende Konizität der Vorrichtung bei einem Kontakt der Schneiden mit der Bohrungsinnenmantelfläche zurückbildend ist. Danach ist an einem unteren Abschnitt der Bohrungsinnenmantelfläche die zweite radiale Abmessung größer als die erste radiale Abmessung an einem oberen Abschnitt der Bohrungsinnenmantelfläche, welcher axial zu dem unteren Abschnitt beabstandet ist. Wenn durch diese Abmessungen jeweils der erste und zweite Durchmesser definiert sind, ist es vorteilhaft, wenn die Differenz zwischen dem zweiten und dem ersten Durchmesser 5 µm, 10 µm, 20 µm, 30 µm, 40 µm, 50 µm oder 60 µm beträgt.

Gemäß einer Weiterbildung der Vorrichtung ist das mindestens eine mechanische Befestigungselement reversibel lösbar an dem Befestigungsgrundkörper befestigt. Dadurch kann das mechanische Befestigungselement insbesondere analog zu einem der reversibel lösbar befestigten Schneidelemente im Wesentlichen, vorzugsweise vollständig, zerstörungsfrei an dem Befestigungsgrundkörper zur reversibel lösbaren Befestigung des Schneidelements befestigt und in gleicherweise bedarfsweise gelöst werden, zum Beispiel im Sinne einer Schraubenverbindung.

Gemäß einer Weiterbildung der Vorrichtung weist das mechanische Befestigungselement einen Befestigungsgewindeabschnitt mit einem Befestigungsgewinde zum wirkmäßigen Verbinden mit dem Befestigungsgrundkörper auf. Dadurch kann das mechanische Befestigungselement und damit das Schneidelement in verbesserter Weise mittels eines einfach herzustellenden Gewindes reversibel lösbar befestigt werden. Danach kann das mechanische Befestigungselement zum Beispiel als Schraubenelement ausgestaltet sein, wobei ein Schraubengewinde des Schraubenelements in ein dem Schraubengewinde korrespondierendes Innengewinde des Befestigungsgrundkörpers eingreift. Das Innengewinde kann insbesondere in den Befestigungsabschnitt mündend angeordnet sein.

Denkbar und möglich ist es aber auch, dass das mechanische Befestigungselement als Klemmelement ausgestaltet ist, wobei ein Klemmkörper des Klemmelements das Schneidelement gegen den Befestigungsabschnitt elastisch vorspannt, insbesondere in radialer Richtung.

Gemäß einer Weiterbildung der Vorrichtung weist mindestens eines der Schneidelemente einen Schneidelementgrundkörper auf, wobei der Schneidelementgrundkörper und die Schneide stoffschlüssig, insbesondere mittels einer gelöteten Verbindung, miteinander verbunden sind. Diese Weiterbildung ist besonders zweckmäßig, weil die Schneide an dem Schneidelementgrundkörper mittels einer konventionellen Lötverbindung besonders kostengünstig befestigt werden kann. In vorteilhafterweise wird der Austausch oder die Reparatur der Schneide nicht beeinträchtigt, weil die Schneide über den Schneidelementgrundkörper mittels des mechanischen Befestigungselements dementsprechend einfach von dem Befestigungsgrundköper demontiert werden kann.

Gemäß einer Weiterbildung der Vorrichtung weist der Schneidelementgrundkörper eine Ausnehmung zur abschnittsweisen Aufnahme des mechanischen Befestigungselements auf. Dadurch wird die reversibel lösbare Befestigung des Schneidelements und damit der Schneide noch weiter verbessert, weil das mechanische Befestigungselement durch eine Anordnung in der Ausnehmung eine azimutale sowie axiale Arretierung des Schneidelements und damit der Schneide bereitstellt, insbesondere mittels eines Formschlusses in azimutaler und axialer Richtung.

Gemäß einer Weiterbildung der Vorrichtung weist mindestens eine der Schneiden in Richtung der Längsachse zueinander versetzte Schneidzähne auf. Hierbei handelt es sich um eine zweckmäßige Maßnahme, weil dadurch in besonders einfacher Weise mehrere Rillen durch ein Schneidelement mittels der Schneidzähne erzeugt werden können. Danach weist die Schneide insbesondere eine Schlitzkontur auf, die durch Schlitznuten gebildet wird. In besonders vorteilhafter Weise werden die Schneidzähne in einem montierten Zustand eines Schneidelementrohkörpers mit mindestens einer Rohschneide in einem an dem Befestigungsabschnitt befestigten Zustand des Schneidelementrohkörpers erzeugt, insbesondere durch Laserstrahlen der Rohschneide (ein entsprechender Laserstrahl erzeugt dabei Schneidnuten in eine monolithische Rohschneide). Insbesondere hierbei tritt ein synergetischer Effekt mit dem monolithischen Materialbereich auf, weil dieser eine besonders stabile Positionierung des Schneidelementrohkörpers damit der Rohschneide erlaubt, insbesondere wenn der Schneidelementrohkörper mithilfe eines der mechanischen Befestigungselemente an dem Befestigungsabschnitt befestigt ist.

Gemäß einer Weiterbildung der Vorrichtung ist mindestens eine der Schneiden derart ausgestaltet, dass eine Anzahldichte der Schneidzähne in Richtung der Längsachse größer einem Schneidzahn pro mm ist. Eine dementsprechend relativ hohe Anzahl von Schneidzähnen kann insbesondere mithilfe des monolithischen Materialbereichs in Kombination mit dem mechanischen Befestigungselement realisiert werden, weil der monolithische Materialbereich eine geeignete Stabilität für die Herstellung solcher Zähne mittels Laserstrahlen an dem Befestigungsgrundkörper bereitstellt und die mechanischen Befestigungselemente eine besonders einfache Befestigung entsprechender Rohschneiden über einen Schneidelementrohkörper bereitstellen. Vorzugsweise ist die Anzahldichte größer einem Schneidzahn pro mm, zwei Schneidzähnen pro mm, drei Schneidzähnen pro mm, vier Schneidzähnen pro mm oder fünf Schneidzähnen pro mm oder mehr.

Gemäß einer Weiterbildung der Vorrichtung ist mindestens eine der Schneiden derart ausgestaltet, dass ein Abstand zwischen zwei sich gegenüberstehenden Schneidzahnecken der Schneidzähne in Richtung der Längsachse kleiner oder gleich 0,7 mm ist. Dadurch können strukturell noch feinere Rillen in der Bohrungsinnenmantelfläche erzeugt werden. Der Abstand kann insbesondere mittels einer nutförmigen Ausnehmung zwischen den Schneidzähnen definiert werden, zum Beispiel einer rechteckigen Nut. Vorzugsweise ist der Abstand kleiner oder gleich 0,7 mm, 0,6 mm, 0,5 mm, 0,4 mm, 0,3 mm, 0,2 mm oder 0,1 mm oder weniger.

Gemäß einer Weiterbildung der Vorrichtung ist mindestens ein Kühlmittelleitungselement zur Kühlmittelversorgung mindestens einer der Schneiden vorgesehen, wobei das Kühlmittelleitungselement mindestens einen Kühlmittelkanal aufweist und das Kühlmittelleitungselement reversibel lösbar in und/oder an dem Befestigungsgrundkörper befestigt ist. Dadurch wird die Standzeit der Vorrichtung noch weiter erhöht, weil nach dieser Maßnahme die Schneiden insbesondere während der Bearbeitung einer Zylinderinnenwand gekühlt werden können. Darüber hinaus können durch die Kühlmittelversorgung Späne von der Schneide weg transportiert werden, indem ein Kühlmittelstrom entsprechend orientiert ist, insbesondere durch eine Orientierung des Kühlmittelkanals gegenüber der Längsachse dergestalt, dass eine Symmetrieachse des Kühlmittelkanals und die Längsachse einen Winkel umschließen, wobei der Winkel ungleich 90° ist, vorzugsweise kleiner 90°, kleiner oder gleich 85°, kleiner oder gleich 80°, kleiner oder gleich 75°, kleiner oder gleich 70°, kleiner oder gleich 65°, kleiner oder gleich 60°, kleiner oder gleich 55°, kleiner oder gleich 50° oder kleiner oder gleich 45°. Vorzugsweise ist das Kühlmittelleitungselement als Kühlmitteldüse ausgestaltet. Der Kühlmittelkanal kann einen konstanten oder veränderlichen Durchmesser aufweisen. Das Kühlmittel kann auch als Spantransportmittel betrachtet werden.

Dass das Kühlmittelleitungselement reversibel lösbar in und/oder an dem Befestigungsgrundkörper befestigt werden kann, ist vorteilhaft, weil das Kühlmittelleitungselement gegen ein analog ausgestaltetes zweites Kühlmittelleitungselement mit einem von dem Kühlmittelkanal verschiedenen zweiten Kühlmittelkanal gegenüber dem Befestigungsgrundkörper und sich selbst zerstörungsfrei ausgetauscht werden kann. Der zweite Kühlmittelkanal kann einen von dem ersten Kühlmittelkanal verschiedenen Kühlmittelkanaldurchmesser (größer oder kleiner) und/oder eine von dem ersten Kühlmittelkanal verschiedene Orientierung gegenüber einer Symmetrieachse des Kühlmittelleitungselements aufweisen.

Gemäß einer Weiterbildung der Vorrichtung weist das Kühlmittelleitungselement mindestens einen Gewindeabschnitt mit einem Gewinde zum wirkmäßigen Verbinden mit dem Befestigungsgrundkörper auf. Dadurch wird in besonders einfacher Weise eine reversibel lösbare Befestigung des Kühlmittelleitungselements realisiert. Danach kann das Kühlmittelleitungselement als Schraubenelement mit einem Außengewinde ausgestaltet sein. Das Außengewinde kann in besonders vorteilhafter Weise in ein dem Außengewinde korrespondierendes Gewinde des Befestigungsgrundkörpers eingreifen.

Gemäß einer Weiterbildung der Vorrichtung sind in einer ersten Querschnittsebene, insbesondere einer orthogonal zur Längsachse orientierten Querschnittsebene, mindestens zwei der Schneidelemente in azimutaler Richtung nicht äquidistant angeordnet. Dadurch wird das Auftreten von mechanischen Schwingungen bei einer bestimmungsgemäßen Verwendung der Vorrichtung, also insbesondere einer Verwendung zur spanabhebenden Bearbeitung einer Zylinderinnenwand, noch weiter reduziert.

Mit einer ersten Querschnittsebene ist insbesondere eine Ebene gemeint, deren Normalenvektor einen von Null verschiedenen Winkel mit der Längsachse bildend ist. Vorzugsweise ist die erste Querschnittsebene orthogonal zur Längsachse orientiert, wonach der Normalenvektor der ersten Querschnittsebene mit der Längsachse einen Winkel von 90° bildend ist. Die erste Querschnittsebene schneidet danach die Vorrichtung in einem Bereich des Befestigungsgrundkörpers gemäß einer Orientierung der ersten Querschnittsebene.

Mit nicht äquidistant ist insbesondere gemeint, dass den Schneidelementen in der ersten Querschnittsebene jeweils ausgehend von der Längsachse ein Radialvektor zugeordnet werden kann, wobei die so definierten Radialvektoren ausgehend von der Längsachse nächstbenachbart zueinander jeweils einen Azimutalwinkel aufspannen, wobei mindestens zwei dieser Azimutalwinkel voneinander verschieden sind und die Summe aller Azimutalwinkel 360° beträgt. Die Radialvektoren sind dabei vorzugsweise jeweils auf eine der Schneiden der Schneidelemente gerichtet, so dass die Radialvektoren besonders bevorzugt jeweils auf eine in azimutaler Richtung vordere Kante der Schneiden ausgerichtet sind.

Vorzugsweise sind in der ersten Querschnittsebene drei Schneidelemente in azimutaler Richtung nicht äquidistant angeordnet sind, wobei die Azimutalwinkel vorzugsweise 115°, 121° und 124° betragen.

Mit nicht äquidistant ist insbesondere im Falle von zwei Schneidelementen gemeint, dass den beiden Schneidelementen in der ersten Querschnittsebene jeweils ausgehend von der Längsachse ein Radialvektor zugeordnet werden kann, wobei die so definierten beiden Radialvektoren nächstbenachbart zueinander jeweils einen Azimutalwinkel aufspannen, also insgesamt zwei Azimutalwinkel, wobei die zwei Azimutalwinkel voneinander verschieden sind und eine Summe der zwei Azimutalwinkel 360° beträgt. Die Radialvektoren sind dabei vorzugsweise jeweils auf eine der Schneiden der Schneidelemente gerichtet, so dass die Radialvektoren besonders bevorzugt jeweils auf eine in azimutaler Richtung vordere Kante der Schneiden ausgerichtet sind.

Wenn die Schneidelemente in der ersten Querschnittsebene in der azimutalen Richtung nicht äquidistant angeordnet sind, lässt sich dies auch als asymmetrische oder unregelmäßige Anordnung bezeichnen.

Gemäß einer Weiterbildung der Vorrichtung sind in einer zweiten Querschnittsebene, insbesondere einer orthogonal zur Längsachse orientierten Querschnittsebene, zwei, drei, vier oder fünf der Schneidelemente angeordnet. Die zweite Querschnittsebene ist analog zu der ersten Querschnittsebene definiert. Gemäß einer Weiterbildung der Vorrichtung ist eine Anzahl der in der zweiten Querschnittsebene liegenden Schneidelemente kleiner oder gleich fünf. Dadurch wird in vorteilhafter Weise eine für die Haftung einer verschleißschützenden Schicht an einer Zylinderwand besonders gut geeignete Oberflächengüte der durch die Vorrichtung gebildeten Rillen bereitgestellt. Vorzugsweise ist die Anzahl kleiner oder gleich fünf, kleiner oder gleich vier, kleiner oder gleich drei oder kleiner oder gleich zwei. Denkbar und möglich ist es aber auch, dass die Anzahl gleich eins ist.

Vorzugsweise ist die zweite Querschnittsebene die erste Querschnittsebene, wenn die Anzahl der Schneidelemente zwei, drei, vier oder fünf beträgt. Alternativ oder ergänzend kann die zweite Querschnittsebene von der ersten Querschnittsebene verschieden sein.

Denkbar und möglich ist es aber auch, dass in einer dritten oder weiteren Querschnittsebene sechs oder mehr der Schneideelemente angeordnet sind. Die dritte oder weitere Querschnittsebene kann analog zu der ersten oder zweiten Querschnittsebene definiert werden. Vorzugsweise sind die Schneidelemente in der dritten und/oder weiteren Querschnittsebene in azimutaler Richtung nicht äquidistant angeordnet. Gemäß einer Weiterbildung der Vorrichtung sind die Befestigungsabschnitte zumindest abschnittsweise schraubenlinienförmig angeordnet. Danach sind insbesondere auch die Schneidelemente und damit die Schneiden zumindest abschnittsweise schraubenlinienförmig angeordnet. Eine solche Anordnung ist für die Bearbeitung von Zylinderwänden zur Erzeugung von Rillen besonders gut geeignet. Diese Anordnung kann auch als helixförmig bezeichnet werden. Vorzugsweise sind die Befestigungsabschnitte schraubenlinienförmig angeordnet. Vorzugsweise sind ein erster Teil der Befestigungsabschnitte entlang einer ersten Schraubenlinie angeordnet und ein zweiter Teil der Befestigungsabschnitte entlang einer zweiten Schraubenlinie angeordnet, wobei die Schraubenlinien voneinander verschieden sind. Vorzugsweise sind die Befestigungsabschnitte um die Längsachse schraubenlinienförmig angeordnet.

Gemäß einer Weiterbildung der Vorrichtung weist der Befestigungsgrundkörper mindestens eine funktionell einer der Schneidelemente zugeordnete Spanbevorratungsausnehmung zur Aufnahme mittels des Schneidelements erzeugter Späne auf. Dadurch für die Oberflächengüte in einer Zylinderwand erzeugter Rillen noch weiter verbessert, weil die Spanbevorratungsausnehmung die Späne derart bevorratet, dass diese bis zum Erreichen eines vorgegebenen Füllvolumens der Spanbevorratungsausnehmung die Zylinderwand nicht kontaktieren. Die Spanbevorratungsausnehmung kann auch als Spanraum bezeichnet werden. In vorteilhafter Weise ist die Spanbevorratungsausnehmung als taschenförmige Nut ausgeformt.

Gemäß einer Weiterbildung der Vorrichtung ist das Kühlmittelleitungselement derart angeordnet, dass der Kühlmittelkanal in eine Grundfläche der Spanbevorratungsausnehmung mündend ist. Dadurch kann in vorteilhafter Weise die Spanbevorratungsausnehmung mit dem Kühlmittel oder dergleichen geflutet werden, so dass die Späne von dem zu bearbeitenden Bereich einer Zylinderwand wegtransportiert werden und eine Überfüllung der Spanbevorratungsausnehmung vermieden wird.

Gemäß einer Weiterbildung der Vorrichtung ist der Befestigungsgrundkörper zur axialen formschlüssigen Arretierung mindestens eines der Schneidelemente ausgestaltet. Dadurch wird die Befestigung der Schneidelemente noch weiter verbessert, weil die axiale formschlüssige Arretierung einer axialen Translation der Schneidelemente während der Bearbeitung einer Zylinderwand mit Vorteil für die Erzeugung reprozierbarer Rillen entgegenwirkt.

Der Schneidelementgrundkörper kann insbesondere quaderförmig, vorzugsweise plattenförmig, ausgeformt sein und zwei sich in Richtung der Längsachse gegenüberliegende Endflächen aufweisen. Diese Endflächen können an sich in Richtung der Längsachse gegenüberliegenden Stufenflächen der axialen formschlüssigen Arretierung formschlüssig anliegen.

Darüber hinaus kann die axiale formschlüssige Arretierung mit einer azimutal formschlüssigen Arretierung zusammenwirken. Die azimutal formschlüssige Arretierung weist insbesondere eine Stufenfläche auf, deren Normalenvektor parallel oder geringfügig divergent bezüglich einer Drehrichtung des Befestigungsgrundkörpers orientiert ist. Auf diese Weise wird eine Anlagefläche für das Schneidelement bereitgestellt, insbesondere wenn das Schneidelement einen quaderförmigen Schneidelementgrundkörper aufweist.

Wenn der Schneidelementgrundkörper quaderförmig ausgestaltet ist, können die axiale formschlüssige Arretierung und die azimutal formschlüssige Arretierung als Plattensitz bezeichnet werden.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Darstellung eines Befestigungsgrundkörpers eines Rillierwerkzeugs nach einer Ausführungsform;
- Fig. 2:: eine schematische Darstellung des Befestigungsgrundkörpers gemäß Fig. 1 in Blickrichtung des Pfeils II aus Fig. 1;
- Fig. 3:: eine schematische Darstellung des Befestigungsgrundkörpers gemäß Fig. 1 in Blickrichtung des Pfeils III aus Fig. 1;
- Fig. 4:: eine schematische Darstellung des Befestigungsgrundkörpers gemäß Fig. 1 in Blickrichtung des Pfeils IV aus Fig. 3;
- Fig. 5:: eine schematische Darstellung des Rillierwerkzeugs mit dem Befestigungsgrundkörper nach Fig. 1 bis Fig. 4 in Blickrichtung des Pfeils III aus Fig. 1;
- Fig. 6:: eine schematische Darstellung eines Querschnitts durch das Rillierwerkzeug nach Fig. 5 gemäß der Schnittlinie VI aus Fig. 5;
- Fig. 7:: die schematische perspektivische Darstellung des Rillierwerkzeugs nach Fig. 5;
- Fig. 8:: eine schematische Darstellung eines Querschnitts durch das Rillierwerkzeug nach Fig. 7 gemäß der Schnittlinie VIII aus Fig. 7;
- Fig. 9:: die schematische perspektivische Darstellung des Rillierwerkzeugs nach Fig. 5 bzw. Fig. 7;
- Fig. 10:: eine schematische Darstellung eines Längsschnitts durch das Rillierwerkzeug nach Fig. 9 gemäß der Schnittlinie X aus Fig. 9;
- Fig. 11:: eine schematische Darstellung eines Querschnitts durch das Rillierwerkzeug nach Fig. 9 gemäß der Schnittlinie XI aus Fig. 9;
- Fig. 11a:: den Querschnitt nach Fig. 11 mit gekennzeichneten Azimutalwinkeln und gegenüber Fig. 11 geschnitten dargestellten Kühlmitteldüsen;
- Fig. 12:: eine schematische perspektivische teilweise Explosionsdarstellung eines Bereichs des Rillierwerkzeugs nach Fig. 5;
- Fig. 13:: eine schematische Darstellung eines Schnitts durch das Rillierwerkzeug nach Fig. 12 gemäß der Schnittlinie XIII aus Fig. 12;
- Fig. 14:: eine schematische Darstellung eines Schneidelements;
- Fig. 15:: eine schematische Darstellung eines Längsschnitts durch das Schneidelement nach Fig. 14 gemäß der Schnittlinie XV aus Fig. 14;
- Fig. 16:: eine schematische teilweise Explosionsdarstellung des Schneidelements nach Fig. 14;
- Fig. 17:: eine schematische Darstellung einer Kühlmitteldüse in einer Vorderansicht mit Blickrichtung auf einen Kühlmittelkanal;
- Fig. 18:: eine schematische Darstellung eines Längsschnitts durch die Kühlmitteldüse nach Fig. 17 gemäß der Schnittlinie XVIII aus Fig. 17;
- Fig. 19:: eine schematische Darstellung der Kühlmitteldüse nach Fig. 17 in einer Seitenansicht;
- Fig. 20:: ein Flussdiagramm zur schematischen Darstellung eines Herstellverfahrens zum Herstellen des Rillierwerkzeugs nach den Fig. 5 bis 19.

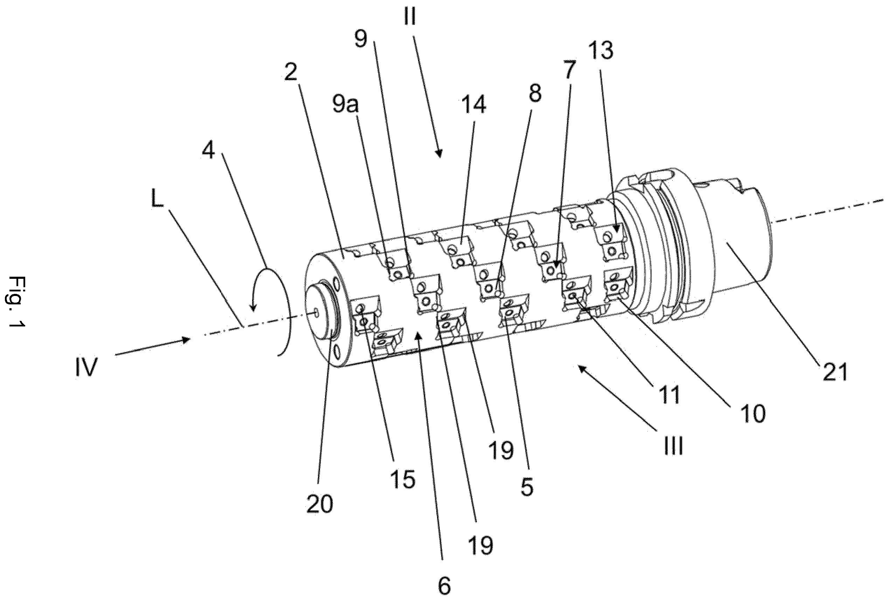

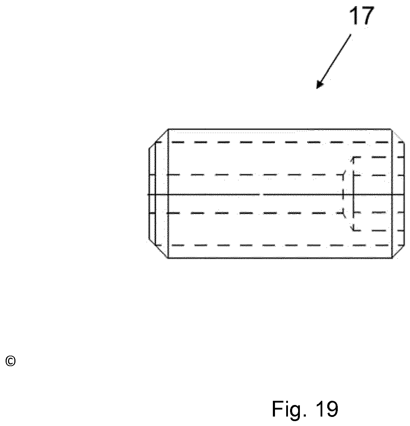

Eine Ausführungsform eines Rillierwerkzeugs 1 wird im Folgenden unter Bezugnahme auf die Fig. 1 bis Fig. 19 eingehender beschrieben.

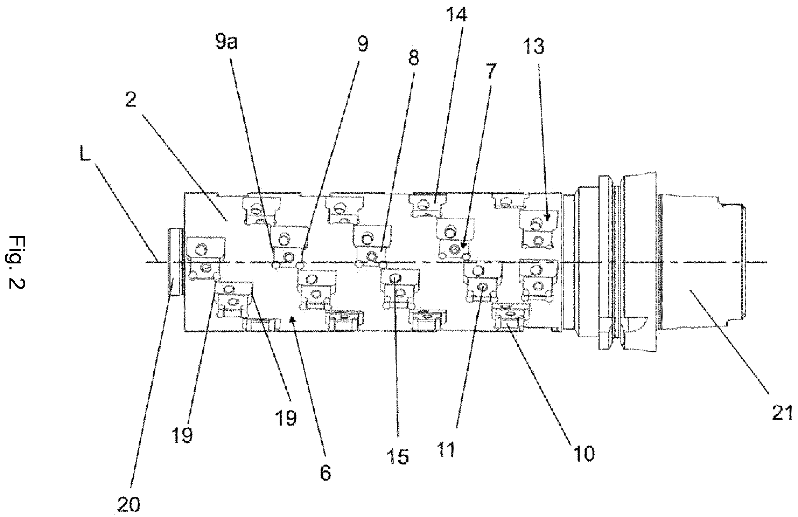

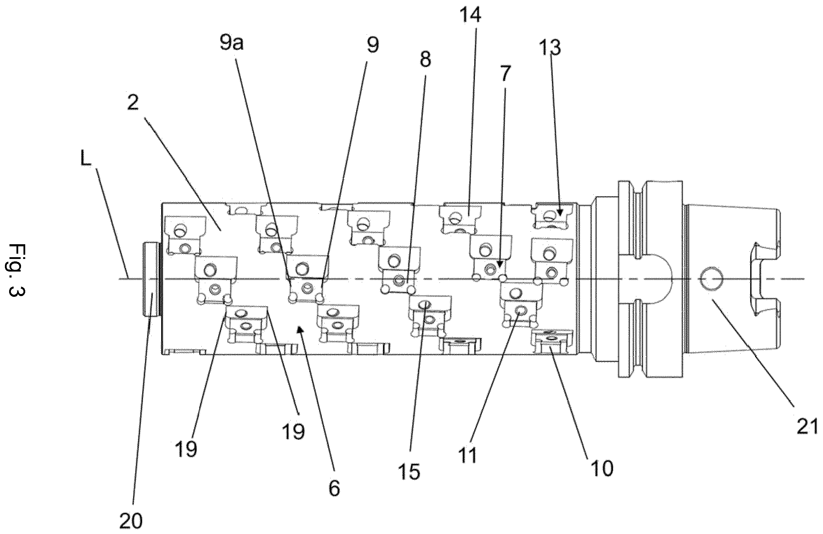

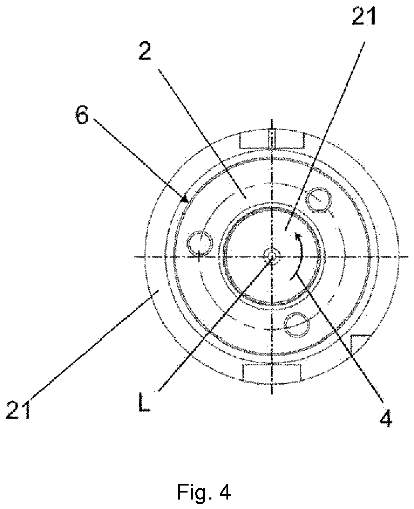

In den Fig. 1 bis Fig. 4 ist ein zylindrischer Befestigungsgrundkörper 2 des Rillierwerkzeugs 1 besonders gut ersichtlich, und zwar in einer perspektivischen Darstellung (Fig. 1) und Bezug nehmend darauf in zwei Seitenansichten (Fig. 2 und Fig. 3) und einer Stirnseitenansicht (Fig. 4).

Denkbar und möglich ist es aber auch, dass der Befestigungsgrundkörper 2 nicht zylindrisch, sondern bezüglich einer Längsachse L konisch ausgeformt ist.

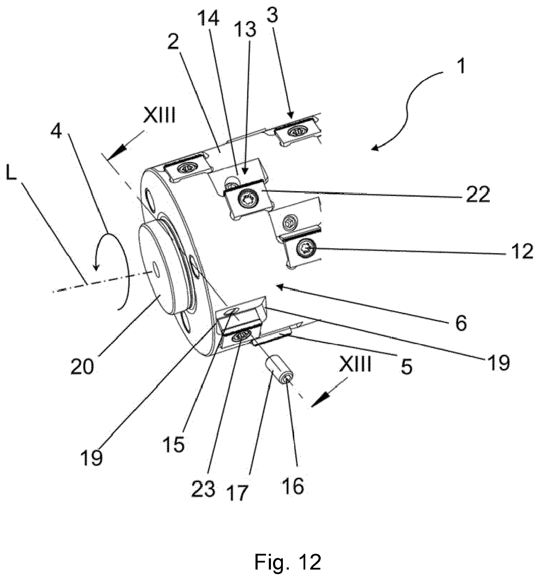

Der Befestigungsgrundkörper 2 ist in den Fig. 1 bis Fig. 4 ohne Schneidelemente 3 dargestellt. Eines der Schneidelemente 3 ist zum Beispiel in Fig. 12 im Detail exemplarisch dargestellt und wird Bezug nehmend auf Fig. 12 weiter unten näher beschrieben.

Der Befestigungsgrundkörper 2 ist um die Längsachse L in azimutaler Richtung 4 drehbar bzw. drehantreibbar, so dass mittels einer solchen Drehung Schneiden 5 der Schneidelemente 3 in eine zylindrische Bohrungsinnenmantelfläche umlaufende Rillen erzeugen können. Eine Struktur der Schneide 5 ist in Fig. 12 besonders gut ersichtlich und wird weiter unten näher beschrieben.

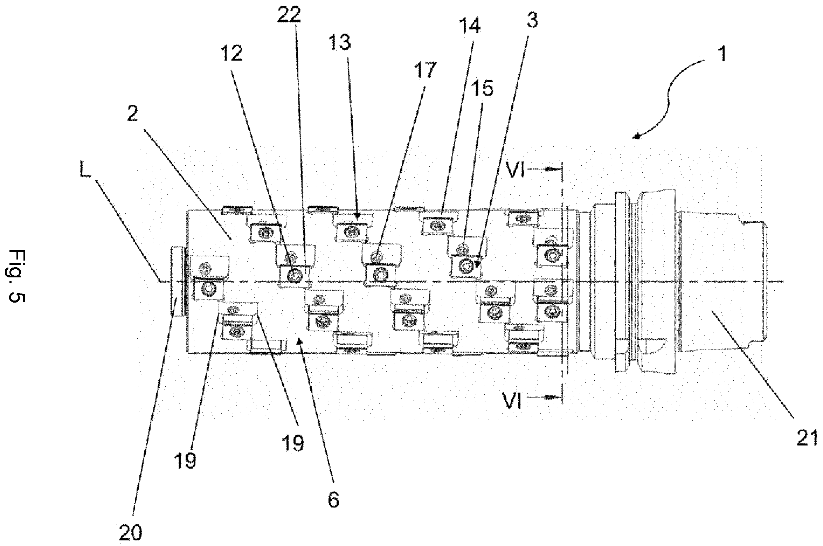

Eine Außenmantelfläche 6 des Befestigungsgrundkörpers 2 weist taschenförmige Befestigungsnuten 7 auf. In den Befestigungsnuten 7 sind, wie zum Beispiel aus Fig. 5 ersichtlich ist, die Schneidelemente 3 eingesetzt. Dabei kontaktieren die Schneidelemente 3 jeweils einen der Befestigungsabschnitte 8 der Außenmantelfläche 6, jeweils eine der Axialflächen 9 der Außenmantelfläche 6 sowie jeweils eine Azimutalfläche 10 der Außenmantelfläche 6. Die der Axialfläche 9 axial gegenüberstehende Axialfläche 9a wird nicht kontaktiert, so dass in axialer Richtung ein Spalt zwischen den Schneidelementen 3 und den Axialflächen 9a gebildet wird.

Wie aus Fig. 1 ersichtlich ist, lassen sich die Befestigungsabschnitte 8, die Axialflächen 9 und Axialflächen 9a sowie die Azimutalflächen 10 jeweils einer der Befestigungsnuten 7 zuordnen. Die Befestigungsabschnitte 8 bilden danach jeweils eine Grundfläche der Befestigungsnuten 7.

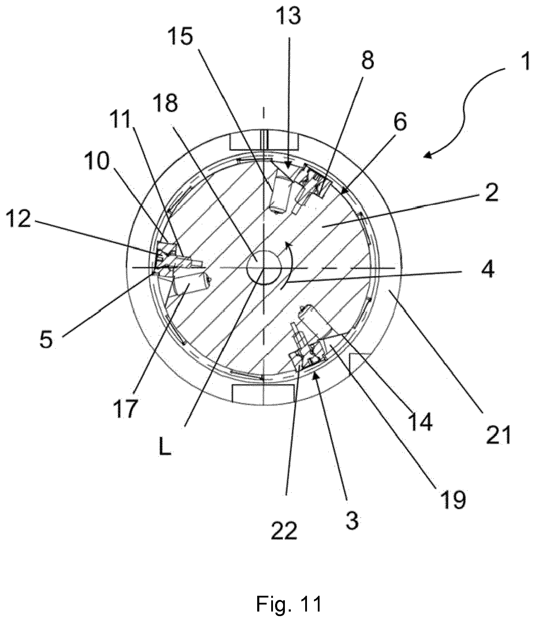

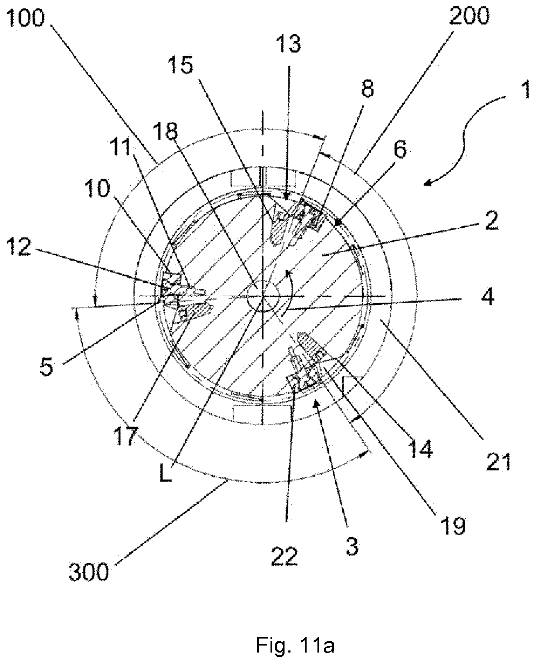

Die Befestigungsnuten 7 bzw. die Befestigungsabschnitte 8, die Axialflächen 9a und die Azimutalflächen 10 bilden jeweils einen Plattensitz für eines der Schneidelemente 3 in der Außenmantelfläche 6 des Befestigungsgrundkörpers 2. Die Befestigungsabschnitte 8 dienen jeweils als Widerlager für eine Befestigung der Schneidelemente 3, weil jeweils ein Innengewinde 11 des Befestigungsgrundkörpers 2 in die Befestigungsabschnitte 8 mündet und die Schneidelemente 3 jeweils mittels einer in jeweils eines der Innengewinde 11 eingreifenden Klemmschraube 12 an dem Befestigungsgrundkörper 2 über einen der Befestigungsabschnitte 8 vorgespannt gelagert sind (siehe zum Beispiel Fig. 11).

Durch einen Mittelpunkt der Innengewinde 11 wird jeweils ein Mittelpunkt der Befestigungsabschnitte 8 definiert, so dass sich anhand eines solchermaßen definierten Mittelpunkts der Befestigungsabschnitte 8 eine axiale Position eines jeden der Befestigungsabschnitte 8 bezüglich der Längsachse L definieren lässt.

In Fig. 1 ist ferner ersichtlich, dass sich in axialer Richtung jedem der Befestigungsabschnitte 8 mindestens ein nächstbenachbarter Befestigungsabschnitt 8 zuordnen lässt, so dass solchermaßen nächstbenachbarte Befestigungsabschnitte 8 an unterschiedlichen Längsachspositionen angeordnet sind.

Der Befestigungsgrundkörper 2 wurde aus einem Vollmaterial, nämlich Stahl, hergestellt, so dass die an unterschiedlichen Längsachsenpositionen angeordneten Befestigungsabschnitte 8 dementsprechend mittels eines monolithischen Materialbereichs bestehend aus Stahl miteinander verbunden sind. Dies ist insbesondere in Abgrenzung zu einem Befestigungsgrundkörper zu verstehen, welcher aus einzelnen Ringscheiben gebildet ist.

Die Außenmantelfläche 6 des Befestigungsgrundkörpers 2 weist außerdem taschenförmige Spanraumnuten 13 auf. Jeder Befestigungsnut 7 ist eine der Spanraumnuten 13 funktionell zugeordnet, wobei die auf diese Weise gebildeten Paare von Spanraumnuten 13 und Befestigungsnuten 7 jeweils derselben Längsachsenposition zugeordnet sind.

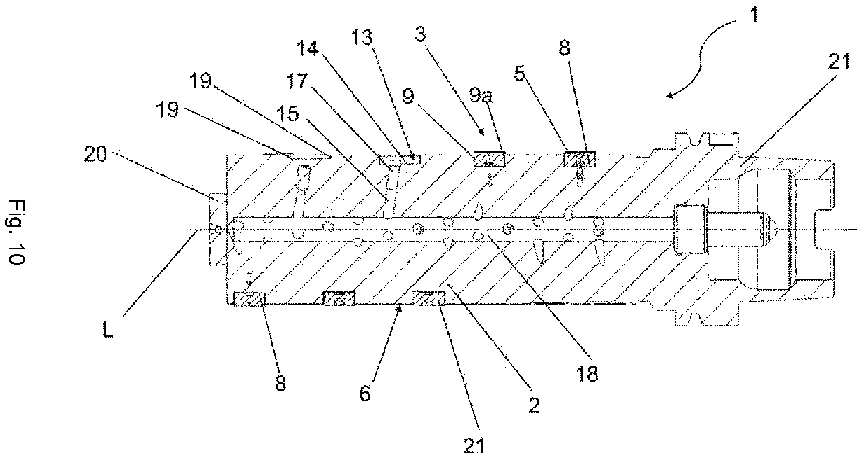

Die Spanraumnuten 13 weisen jeweils einen Bodenabschnitt 14 und jeweils zwei sich in axialer Richtung gegenüberstehende Axialflächen 19 auf. In den Bodenabschnitt 14 mündet jeweils ein Kühlmittelabzweigungskanal 15 des Befestigungsgrundkörpers 2. In dem Kühlmittelabzweigungskanal 15 ist eine Kühlmitteldüse 17 mittels einer Gewindeverbindung lösbar befestigt. Die Kühlmitteldüse 17 weist einen Spülkanal 16 auf, welcher über jeweils einen der Kühlmittelabzweigungskanäle 15 in kommunizierender Verbindung mit einem Kühlmittelhauptkanal 18 des Befestigungsgrundkörpers 2 steht (siehe zum Beispiel Fig. 10). Bei einer mittels einer externen Druckquelle druckbeaufschlagten Flutung des Kühlmittelhauptkanals 18 mit einem Kühlmittel wird dieses zuerst in die Kühlmittelabzweigungskanäle 15 und sodann in die Spülkanäle 16 eingeleitet, so dass das Kühlmittel aus den Spülkanälen 16 austritt und die Bodenabschnitte 14 flutet. Auf diese Weise werden in den Spanraumnuten 13 angesammelte Späne einer Zylinderinnenwand oder dergleichen aus den Spanraumnuten 13 herausgespült und damit von der Zylinderinnenwand wegtransportiert. Das Kühlmittel kann danach auch als Spantransportmittel betrachtet werden.

An einem ersten Ende weist der Befestigungsgrundkörper 2 einen zylindrischen Kalibrierbund 20 auf. Der Befestigungsgrundkörper 2 kann über den Kalibrierbund 20 kalibriert werden, indem der Befestigungsgrundkörper 2 an dem Ende des Kalibrierbunds 20 axial eingespannt wird, und bezüglich einer Kalibrierachse ein Abstand der Schneiden 5 zur Längsachse L gemessen wird. Auf diese Weise kann ein vorgegebener Rundlauf des Befestigungsgrundkörpers 2 überprüft werden.

An einem dem ersten Ende gegenüberliegenden zweiten Ende weist der Befestigungsgrundkörper 2 einen Hohlschaftkegel 21 auf. Der Befestigungsgrundkörper 2 und damit das Rillierwerkzeug 1 kann über den Hohlschaftkegel 21 mit einer Spindel zum Drehantreiben des Rillierwerkzeugs 1 lösbar verbunden werden, so dass der Befestigungsgrundkörper 2 um die Längsachse L in azimutaler Richtung 4 gedreht werden kann.

In Fig. 2 ist besonders deutlich zu erkennen, dass die Befestigungsabschnitte 8 gemäß der in Fig. 2 dargestellten zweidimensionalen Projektion des Befestigungsgrundkörpers 2 nicht parallel zur Längsachse ausgerichtet sind, sondern jeweils um eine senkrecht zur Zeichnungsebene der Fig. 2 und damit senkrecht zur Längsachse L orientierten Zentralachse rotiert angeordnet sind, und zwar um einen Rotationswinkel von 2°. Dies lässt sich besonders gut an dem gegenüber der Längsachse L geneigneten Verlauf der durch die Azimutalflächen 10 gebildeten Kanten erkennen, so dass sich der Rotationswinkel auch anhand eines in einer zweidimensionalen Projektion des Befestigungsgrundkörpers 2 gebildeten Winkels zwischen diesen Kanten und der Längsachse L beschreiben lässt. Denkbar und auch möglich ist es aber auch, dass die Befestigungsabschnitte 8 parallel zur Längsachse orientiert sind, wonach der Rotationswinkel 0° beträgt.

In den Fig. 5, Fig. 7 und Fig. 9 ist das Rillierwerkzeug 1 in einer Seitenansicht in Blickrichtung auf den Befestigungsgrundkörper 2 gemäß Fig. 2 schematisch dargestellt. Aus diesen Figuren ist besonders gut ersichtlich, dass die Schneidelemente 3 schraubenlinienförmig um die Längsachse L angeordnet sind, um auf diese Weise eine mehrfache Rillierung (mehrere Schneidelemente auf einer Längsachsenposition) an einer Position in einer Zylinderinnenwand mit einer relativ gering Anzahl von Schneidelementen 3 bereitstellen zu können.

Eine solchermaßen realisierte schraubenlinienförmige Anordnung kann auch als helixartige Anordnung bezeichnet werden.

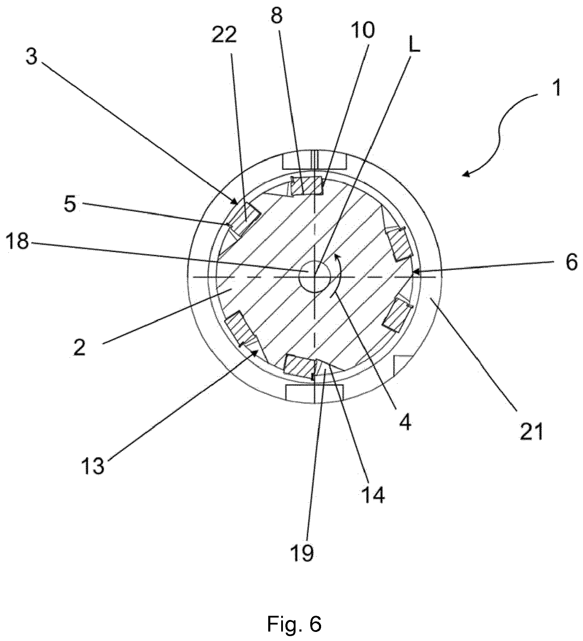

Bezugnehmend auf Fig. 5, Fig. 7, Fig. 9 und Fig. 12 ist aus den Schnittdarstellungen der Fig. 6, Fig. 8, Fig. 10, Fig. 11 und Fig. 13 der detaillierte Aufbau des Rillierwerkzeugs 1 ersichtlich.

So zeigt zunächst eine Zusammenschau der Fig. 5 und Fig. 6, dass die dem Hohlschaftkegel 21 in axialer Richtung nächstbenachbarten Schneidelemente 3 (siehe Schnittlinie VI aus Fig. 5) zwischen zwei verschiedenen azimutalen Abständen in der azimutalen Richtung 4 alternierend in diesem Querschnitt angeordnet sind, also nicht äquidistant. Diese Schneidelemente 3 dienen beispielsweise der Bearbeitung eines oberen Endbereichs einer Bohrungsinnenmantelfläche einer Zylinderbohrung. Gemäß der in Fig. 6 ersichtlichen Anzahl von sechs Schneidelementen 3, wird auf diese Weise ein Sechsschneider gebildet.

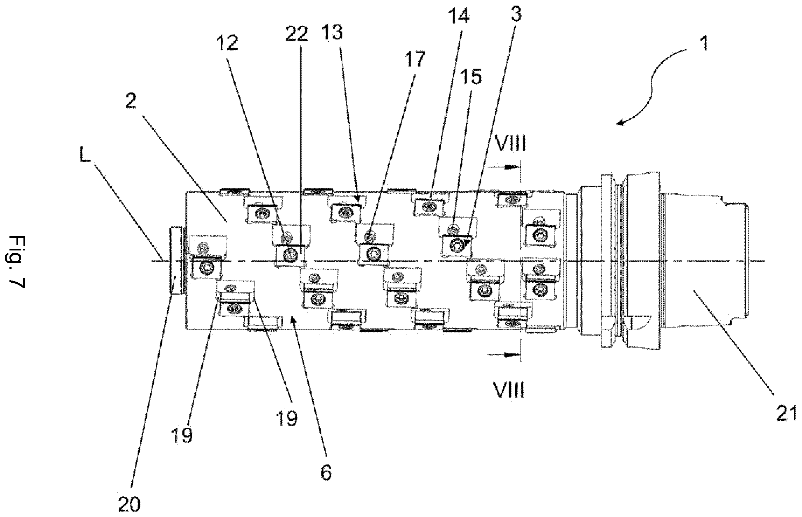

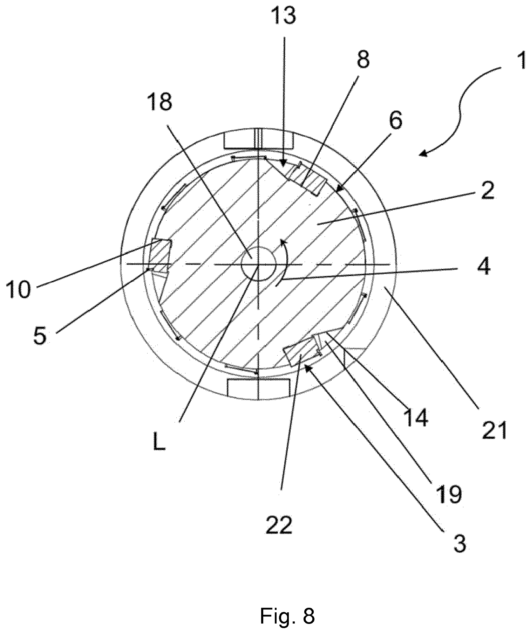

Eine Zusammenschau der Fig. 7 und Fig. 8 zeigt, dass für alle übrigen der Schneidelemente 3 exemplarisch, also die dem Hohlschaftkegel 21 in axialer Richtung weiter beabstandeten Schneidelemente 3, dass diese in der azimutalen Richtung 4 nicht äquidistant in einem Querschnitt nach Fig. 8 oder einem analogen, axial parallel verschobenen Querschnitt angeordnet sind. Gemäß der in Fig. 8 ersichtlichen Anzahl von drei Schneidelementen 3 in einem Querschnitt werden in Richtung der Längsachse L auf diese Weise zwölf Dreischneider gebildet.

In den Fig. 6 und Fig. 7 ist exemplarisch ersichtlich, dass die Schneidelemente 3 jeweils einen Schneidenträger 22 aufweisen, an welchem jeweils eine Schneide 5 gelötet ist. Eine Zusammenschau zum Beispiel mit Fig. 5 zeigt, dass die Schneidenträger 22 plattenförmig ausgeformt sind.

Der Schnittdarstellung nach Fig. 10 ist der Aufbau des Kühlmittelhauptkanals 18 und der mit diesem in kommunizierender Verbindung stehenden Kühlmittelabzweigungskanäle 15 ersichtlich. Der Kühlmittelhauptkanal 18 verläuft parallel zur Längsachse L und um diese herum von dem Hohlkegelzylinder 21 bis hin zu einem dem Hohlkegelzylinder 21 gegenüberliegenden Ende des Befestigungsgrundkörpers 2, ohne diesen aber an diesem Ende zu durchstoßen. Von dem Kühlmittelhauptkanal 18 zweigen Kühlmittelabzweigungskanäle 15 in einem von 90° verschiedenen Winkel derart ab, dass die Kühlmittelabzweigungskanäle 15 in Richtung des Hohlschaftkegels 21 geneigt sind, um auf diese Weise einen dementsprechend orientierten Kühlmittelaustrittsstrom zum effektiven Abtransport von Spänen aus den Spanraumnuten 13 bereitzustellen.

In einem zu dem Bodenabschnitt 14 benachbarten jeweiligen Endabschnitt der Kühlmittelabzweigungskanäle 15 ist jeweils eine der Kühlmitteldüsen 17 eingeschraubt. Danach sind die Kühlmitteldüsen 17 in gleichweise in Richtung des Hohlschaftkegels 21 geneigt, wie die Kühlmittelabzweigungskanäle 15.

Der Schnittdarstellung aus Fig. 11 ist zu entnehmen, dass die Kühlmitteldüsen 17 in Blickrichtung parallel zur Längsachse L sich in radialer Richtung erstreckend in den Kühlmittelabzweigungskanäle 15 eingeschraubt sind.

Aus Fig. 10 ist besonders gut ersichtlich, dass die Schneidelemente 3 durch den Befestigungsgrundkörper 2 monolithisch entlang der Längsachse miteinander verbunden sind, weil der Befestigungsgrundkörper 2 monolithisch ist.

Aus der Schnittdarstellung in Fig. 11 ist ersichtlich, dass jeweils eine der Klemmschrauben 12 durch jeweils einen der Schneidenträger 22 durchgesteckt ist und sodann in jeweils einem der Innengewinde 11 eingeschraubt ist.

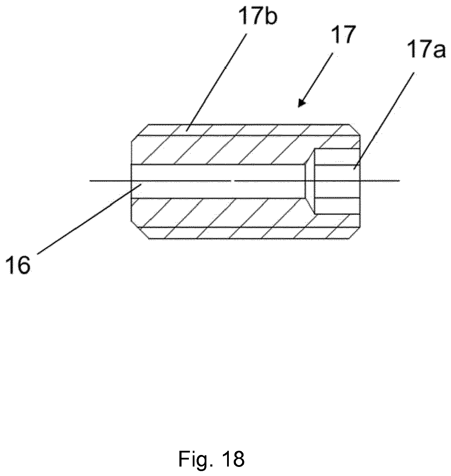

Die Schnittdarstellung nach Fig. 11a ist mit der Schnittdarstellung nach Fig. 11 identisch, bis auf, dass in Fig. 11a auch die Kühlmitteldüsen 17 geschnitten dargestellt sind, um die Neigung der Kühlmitteldüsen 17 zu verdeutlichen (andernfalls wäre in Fig. 11a ein durch die Kühlmitteldüsen 17 durchgehend verlaufender Spülkanal 16 ersichtlich, welcher zum Beispiel in Fig. 18 im Detail dargestellt ist).

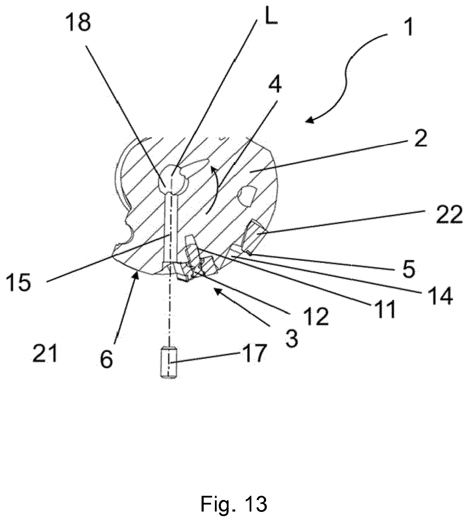

Anhand von Fig. 11a wird außerdem für die Dreischneider exemplarisch deutlich gemacht, dass die Schneidelemente 3 in der Schnittebene gemäß Fig. 11 bzw. Fig. 11a (oder einer analogen, parallelverschobenen Schnittebene) in der azimutalen Richtung 4 nicht äquidistant angeordnet sind. So bilden die Schneidelemente 3 in dieser Schnittebene drei Azimutalwinkel 100, 200 und 300, wobei diese Azimutalwinkel - wie in Fig. 11a dargestellt - durch Winkelschenkel definiert sind, welche im Sinne von Radialvektoren jeweils auf die gleichen vorderen Kanten der Schneiden 5 gerichtet sind. Der Azimutalwinkel 100 beträgt 115°, der Azimutalwinkel 200 beträgt 124° und der Azimutalwinkel 300 beträgt 121°. Auf diese Weise wird eine nicht äquidistante Anordnung der Schneidelemente realisiert. Denkbar und auch möglich sind auch andere Beträge der Azimutalwinkel 100, 200 und 300, sofern mindestens zwei, vorzugsweise drei, dieser Azimutalwinkel voneinander betragsmäßig verschieden sind. Die aus Fig. 11a ersichtliche Darstellung von Azimutalwinkeln lässt sich auch auf die Anordnung des Sechsschneiders nach Fig. 6 übertragen, wonach sich analog zur Fig. 11a sechs Azimutalwinkel definieren lassen. In Fig. 12 ist ein vorderer Bereich des Rillierwerkzeugs 1 im Detail schematisch mit ausgebauter Kühlmitteldüse 15 dargestellt. Die Orientierung der in Fig. 12 eingezeichneten Schnittlinie XIII entspricht exemplarisch der Orientierung der Kühlmittelabzweigungskanäle 15 in dem Befestigungsgrundkörper 2 und damit der Kühlmitteldüsen 17 sowie der Spülkanäle 16. Wie bereits Bezug nehmend auf die Fig. 10 und Fig. 11 beschrieben ist, ist der Kühlmittelabzweigungskanal 15 danach in Richtung auf den Hohlschaftkegel 21 geneigt orientiert. In der Schnittdarstellung aus Fig. 13 ist ersichtlich, dass der Kühlmittelabzweigungskanal 15 in Richtung der Schnittlinie XIII, welche parallel zu diesem Kanal verläuft, mit dem Kühlmittelhauptkanal 18 radial verbunden ist, also in einer kommunizierenden Verbindung steht.

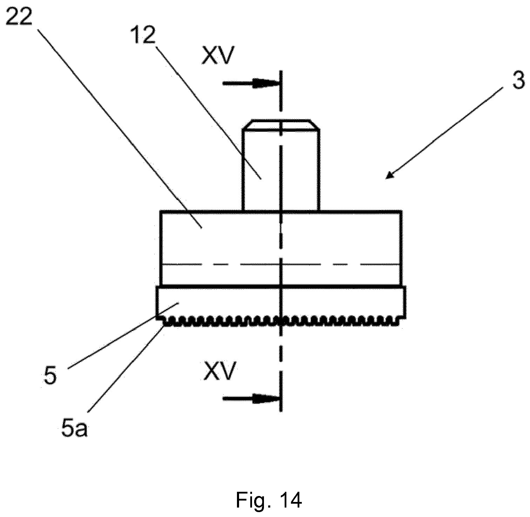

Fig. 14 zeigt exemplarisch eines der Schneidelemente 3 im Detail zusammen mit einer schematischen Darstellung einer der Klemmschrauben 12, welche durch den Schneidenträger 22 durchgesteckt ist.

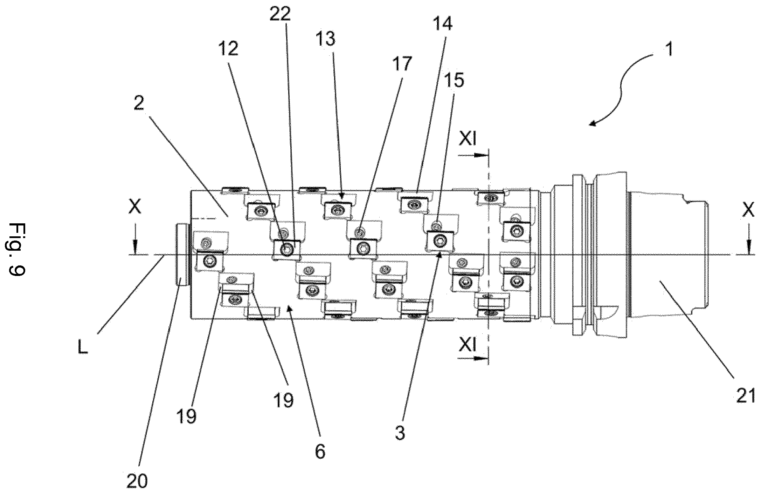

Aus Fig. 14 ist ersichtlich, dass die Schneide 5 eine Vielzahl von Schneidzähnen 5a aufweist, welche jeweils rechteckige Schneidzahnecken bilden. Die Schneide 5 besteht dabei aus einem polykristallinen Diamantmaterial und ist mittels einer gelöteten Verbindung mit dem Schneidenträger 5 verbunden. Im zum Beispiel gemäß Fig. 9 befestigten Zustand des Schneidelements 3 sind die Schneide 5 und damit die Schneidzähne 5a parallel zur Längsachse L angeordnet.

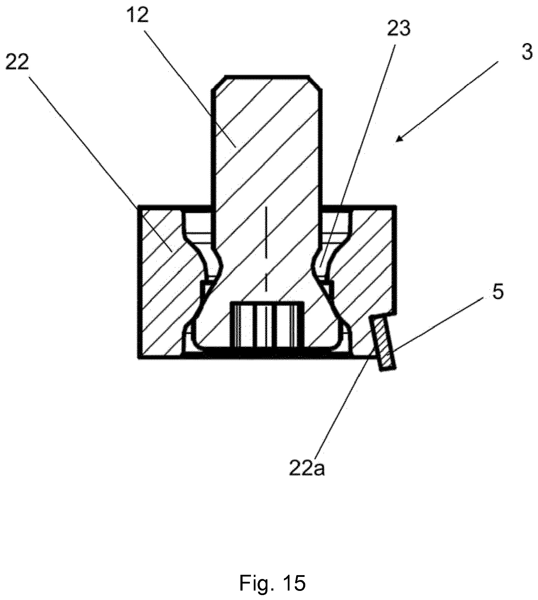

Aus der Schnittdarstellung in Fig. 15 ist ersichtlich, dass die Klemmschraube 12 in einer lavaldüsenförmigen Bohrung 23 des Schneidenträgers 22 angeordnet ist, so dass die Klemmschraube 12 den Schneidenträger 22 mittels eines Eingriffs eines hier nicht näher dargestellten Außengewindes der Klemmschraube 12 in das Innengewinde 11 des Befestigungsgrundkörpers 2 im Sinne eines Federelementes radial elastisch vorspannt.

Aus der Schnittdarstellung in Fig. 15 ist ferner ersichtlich, dass die Schneide 5 zur Bildung eines Freiwinkels in einem entsprechenden Schneidensitz 22a des Schneidenträgers 22 gelötet ist.

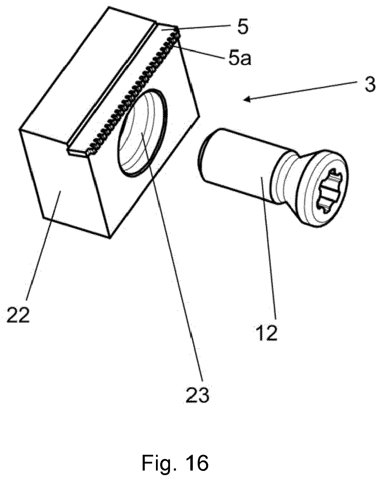

Aus der schematischen Explosionsdarstellung in Fig. 16 ist die Montage des Schneidelements 3 mithilfe der Klemmschraube 12 besonders gut ersichtlich, wonach die Klemmschraube 12 durch die Bohrung 23 gesteckt und sodann festgeschraubt wird.

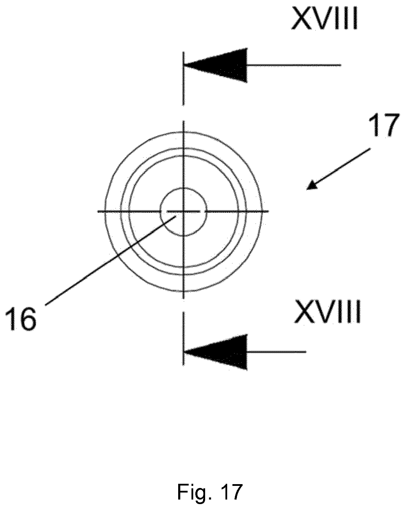

Aus den Fig. 17 bis Fig. 19 ist der detaillierte Aufbau der Kühlmitteldüse 17 ersichtlich.

So zeigt eine Zusammenschau dieser Figuren, dass der Spülkanal 16 der Kühlmitteldüse 17 bis hin zu einem Montageabschnitt 17a einen konstanten Durchmesser aufweist (siehe insbesondere Fig. 18). In dem Montageabschnitt 17a kann zum Beispiel ein Inbusschlüssel oder dergleichen eingreifen, so dass auf diese Weise die Kühlmitteldüse 17 über ein Außengewinde 17b der Kühlmitteldüse 17 in jeweils einen der Kühlmittelabzweigungskanäle 15 des Befestigungsgrundkörpers 2 eingeschraubt werden kann. In den Kühlmittelabzweigungskanälen 15 ist hierfür jeweils ein dem Außengewinde 17b korrespondierendes Innengewinde vorgesehen.

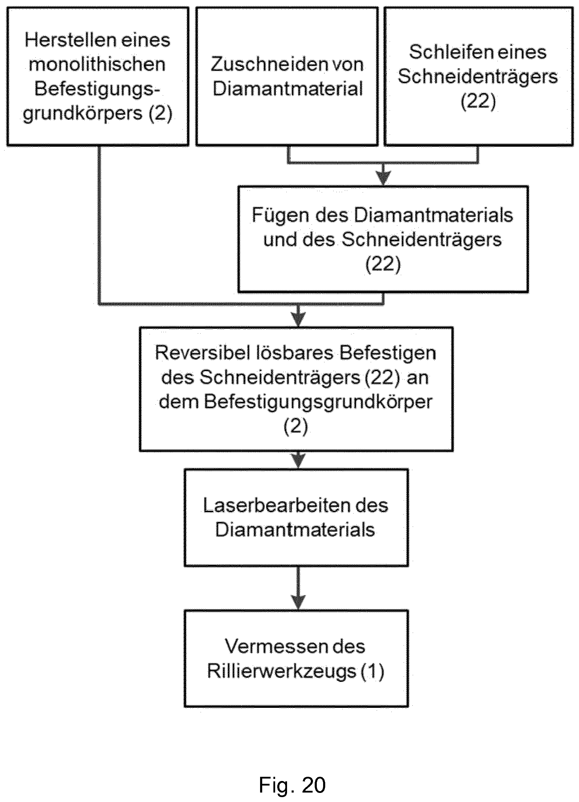

Fig. 20 zeigt ein Flussdiagramm, aus welchem schematisch ein Verfahren zur Herstellung des Rillierwerkzeugs 1 am Beispiel der Verwendung eines Schneidenträgers 22 ersichtlich ist. Danach werden zunächst der monolithische Befestigungsgrundkörper 2 durch eine spanabhebende Bearbeitung wie Fräsen und Drehen hergestellt (in Fig. 20, "Herstellen des monolithischen Befestigungsgrundkörpers (2)"), Diamantmaterial plattenförmig zugeschnitten (in Fig. 20, "Zuschneiden von Diamantmaterial") und der Schneidenträger 22 geschliffen (in Fig. 20 "Schleifen des Schneidenträgers (22)").

Das zugeschnittene Diamantmaterial und der Schneidenträger 22 werden durch Löten miteinander verbunden (in Fig. 20, "Fügen des Diamantmaterials und des Schneidenträgers (22)").

Der Schneidenträger 22 wird sodann an dem Befestigungsgrundkörper 2 reversibel lösbar befestigt (in Fig. 20 "Reversibel lösbares Befestigen des Schneidenträgers (22) an dem Befestigungsgrundkörper").

Danach wird das Diamantmaterial an dem Befestigungsgrundkörper 2 mittels eines Lasers bearbeitet, so dass in dem Diamantmaterial die Schneidzähne 5a durch Verdampfen eines Teiles des Diamantmaterials erzeugt werden (in Fig. 20 "Laserbearbeiten des Diamantmaterials").

Schließlich wird das auf diese Weise hergestellte Rillierwerkzeug 1 vermessen (in Fig. 20 "Vermessen des Rillierwerkzeugs (1)"), ob die Schneidzähne 5a vorgegebenen Abmessungen entsprechen.

## Patentansprüche

1. Vorrichtung (1) zur Oberflächenbearbeitung einer Bohrungsinnenmantelfläche einer Bohrung, umfassend einen Befestigungsgrundkörper (2) mit einer Längsachse (L) und einer Außenmantelfläche (6), an der Außenmantelfläche (6) an Befestigungsabschnitten (8) befestigte Schneidelemente (3), wobei die Schneidelemente (3) jeweils mindestens eine Schneide (5) zur Erzeugung einer rillenförmigen Oberflächenstruktur in der Bohrungsinnenmantelfläche aufweisen und mindestens eine der Schneiden (5) ein polykristallines Diamantmaterial umfasst, **dadurch gekennzeichnet, dass** mindestens eines der Schneidelemente (3) jeweils mittels mindestens eines mechanischen Befestigungselements (12) reversibel lösbar befestigt ist und mindestens zwei der Befestigungsabschnitte (8) an verschiedenen Längsachsenpositionen angeordnet sowie mittels eines monolithischen Materialbereichs des Befestigungsgrundkörpers (2) miteinander verbunden sind.

2. Vorrichtung (1) nach Anspruch 1, **dadurch gekennzeichnet, dass** die jeweils mittels mindestens des einen mechanischen Befestigungselements (12) reversibel lösbar befestigten Schneidelemente (3) an den an verschiedenen Längsachsenpositionen angeordneten Befestigungsabschnitten (8) befestigt sind.

3. Vorrichtung (1) nach einem der vorhergehenden Ansprüche, **dadurch gekennzeichnet, dass** der monolithische Materialbereich in azimutaler Richtung (4) geschlossen ausgeformt ist.

4. Vorrichtung (1) nach einem der vorhergehenden Ansprüche, **dadurch gekennzeichnet, dass** das mindestens eine mechanische Befestigungselement (12) reversibel lösbar an dem Befestigungsgrundkörper befestigt ist.

5. Vorrichtung (1) nach einem der vorhergehenden Ansprüche, **dadurch gekennzeichnet, dass** das mechanische Befestigungselement (12) einen Befestigungsgewindeabschnitt mit einem Befestigungsgewinde zum wirkmäßigen Verbinden mit dem Befestigungsgrundkörper (12) aufweist.

6. Vorrichtung (1) nach einem der vorhergehenden Ansprüche, **dadurch gekennzeichnet, dass** mindestens eines der Schneidelemente (3) einen Schneidelementgrundkörper (22) aufweist, wobei der Schneidelementgrundkörper (22) und die Schneide (5) stoffschlüssig, insbesondere mittels einer gelöteten Verbindung, miteinander verbunden sind.

7. Vorrichtung (1) nach einem der vorhergehenden Ansprüche, **dadurch gekennzeichnet, dass** der Schneidelementgrundkörper (22) eine Ausnehmung (23) zur abschnittsweisen Aufnahme des mechanischen Befestigungselements (12) aufweist.

8. Vorrichtung (1) nach einem der vorhergehenden Ansprüche, **dadurch gekennzeichnet, dass** mindestens eine der Schneiden (5) in Richtung der Längsachse (L) zueinander versetzte Schneidzähne (5a) aufweist.

9. Vorrichtung (1) nach einem der vorhergehenden Ansprüche, **dadurch gekennzeichnet, dass** mindestens eine der Schneiden (5) derart ausgestaltet ist, dass eine Anzahldichte der Schneidzähne (5a) in Richtung der Längsachse (L) größer einem Schneidzahn pro mm ist.

10. Vorrichtung (1) nach einem der vorhergehenden Ansprüche, **dadurch gekennzeichnet, dass** mindestens eine der Schneiden (5) derart ausgestaltet ist, dass ein Abstand zwischen zwei sich gegenüberstehenden Schneidzahnecken der Schneidzähne (5a) in Richtung der Längsachse kleiner oder gleich 0,7 mm ist.

11. Vorrichtung (1) nach einem der vorhergehenden Ansprüche, **dadurch gekennzeichnet, dass** mindestens ein Kühlmittelleitungselement (17) zur Kühlmittelversorgung mindestens einer der Schneiden (5) vorgesehen ist, wobei das Kühlmittelleitungselement (17) mindestens einen Kühlmittelkanal (16) aufweist und das Kühlmittelleitungselement (17) reversibel lösbar in und/oder an dem Befestigungsgrundkörper (2) befestigt ist.

12. Vorrichtung (1) nach einem der vorhergehenden Ansprüche, **dadurch gekennzeichnet, dass** das Kühlmittelleitungselement (17) mindestens einen Gewindeabschnitt (17a) mit einem Gewinde zum wirkmäßigen Verbinden mit dem Befestigungsgrundkörper (2) aufweist.

13. Vorrichtung (1) nach einem der vorhergehenden Ansprüche, **dadurch gekennzeichnet, dass** in einer ersten Querschnittsebene, insbesondere einer orthogonal zur Längsachse orientierten Querschnittsebene, mindestens zwei der Schneidelemente (3) in azimutaler Richtung nicht äquidistant angeordnet sind.

14. Vorrichtung (1) nach einem der vorhergehenden Ansprüche, **dadurch gekennzeichnet, dass** in einer zweiten Querschnittsebene, insbesondere einer orthogonal zur Längsachse orientierten Querschnittsebene, zwei, drei, vier oder fünf der Schneidelemente (3) angeordnet sind.

15. Vorrichtung (1) nach einem der vorhergehenden Ansprüche, **dadurch gekennzeichnet, dass** die Befestigungsabschnitte (8) zumindest abschnittsweise schraubenlinienförmig angeordnet sind.

16. Vorrichtung (1) nach einem der vorhergehenden Ansprüche, **dadurch gekennzeichnet, dass** der Befestigungsgrundkörper (2) mindestens eine funktionell einer der Schneidelemente (3) zugeordnete Spanbevorratungsausnehmung (13) zur Aufnahme mittels des Schneidelements (3) erzeugter Späne aufweist.

17. Vorrichtung (1) nach einem der vorhergehenden Ansprüche, **dadurch gekennzeichnet, dass** das Kühlmittelleitungselement (17) derart angeordnet ist, dass der Kühlmittelkanal (16) in eine Grundfläche (14) der Spanbevorratungsausnehmung (13) mündend ist.

18. Vorrichtung (1) nach einem der vorhergehenden Ansprüche, **dadurch gekennzeichnet, dass** der Befestigungsgrundkörper (2) zur axialen formschlüssigen Arretierung mindestens eines der Schneidelemente (3) ausgestaltet ist.
